(19) 
**Europäisches Patentamt**
**European Patent Office**
**Office européen des brevets**

(11) **EP 1 668 438 B1**

(12) **EUROPEAN PATENT SPECIFICATION**

(45) Date of publication and mention
of the grant of the patent:
**18.06.2008 Bulletin 2008/25**

(51) Int Cl.:
**G06F 1/00** (2006.01)

(21) Application number: **04768538.3**

(86) International application number:
**PCT/GB2004/003992**

(22) Date of filing: **17.09.2004**

(87) International publication number:
**WO 2005/040998 (06.05.2005 Gazette 2005/18)**

(54) **METHOD AND SYSTEM FOR AUTHENTICATING A USER**

VERFAHREN UND SYSTEM ZUM AUTHENTIFIZIEREN EINES BENUTZERS

PROCEDE ET SYSTEME POUR L'AUTHENTIFICATION D'UN UTILISATEUR

(84) Designated Contracting States:
**AT BE BG CH CY CZ DE DK EE ES FI FR GB GR
HU IE IT LI LU MC NL PL PT RO SE SI SK TR**

(30) Priority: **30.09.2003 GB 0322876**

(43) Date of publication of application:
**14.06.2006 Bulletin 2006/24**

(73) Proprietor: **BRITISH TELECOMMUNICATIONS
public limited company
London, Greater London EC1A 7AJ (GB)**

(72) Inventor: **GHANEA-HERCOCK, Robert, Alan
Ipswich, Suffolk IP3 8JJ (GB)**

(74) Representative: **Nash, Roger William et al
BT Group Legal
Intellectual Property Department
PP C5A
BT Centre
81 Newgate Street
London EC1A 7AJ (GB)**

(56) References cited:
**WO-A-00/51244          WO-A-01/77792
WO-A-02/41114          US-A- 5 884 270
US-B1- 6 609 198**

EP 1 668 438 B1

**Description**

Technical Field

This invention relates to a system and method for generating an authentication rating for an entity. More particularly, but not exclusively, the invention relates to a distributed authentication system which automatically generates an authentication rating for the entity according to a set of predefined fuzzy inferencing rules.

Background to the Invention and Prior Art

The process of securing IT services is a complex and continuously evolving battle between defensive and offensive strategies. An important aspect of this process is the authorisation of legitimate users of IT resources, as it is the human element which is the weakest link in any security architecture. Good encryption techniques and strong public-key mechanisms assist in securing IT services, but if the end user of the system cannot be authenticated as a valid user then the whole security strategy fails.

When compared with the level of technology commonly applied in the domains of intrusion detection and firewall management (in which an extensive number of commercially available software and hardware solutions exist), the domain of user authentication has been significantly neglected. For a significant proportion of applications, a simple user password login is all that is required for authentication. Developments in the area of authentication include the use of biometric methods, such as fingerprint or iris-scan identification, however the cost of these technologies is still prohibitive. Alternatively, authentication may be carried out using smart cards with hardware encryption. This is a very secure solution, which is widely used in military and sensitive commercial areas, but is expensive and costly to manage. Also if the card is lost or stolen a serious security breach can occur.

With the rapid expansion of electronic commerce, organisations are increasingly exposing their internal infrastructure to wireless, web and other access mechanisms, and with it their ability to protect that infrastructure with perimeter defence systems declines. A lack of manpower within companies can lead to user-access rights not being properly tracked, and limited oversight of system administrative changes. Web Services, an entire concept which revolves around constant, ,secure data trading is a particular area concerned with authentication since ultimately employees, business partners, customers and suppliers will be talking to each other through such mechanisms.

In view of this, a number of authentication systems are being developed in which a plurality of sources are used for improved robustness during authentication. One example of this is described in "Multimodal Decision-Level Fusion for Person Authentication by Vassilios Chatzis, Adrian G. Bors and Ioannis Pitas, IEEE Trans. on Systems, man and cybernetics Part A: Systems and Humans, pp. 674-681 Nov. 1999, in which a fuzzy clustering algorithm is used to combine the output from face and voice recognition systems. This document describes a user authentication system which combines various different methods for authenticating a person, such as voice features and face image information including shape and grey-level values.

Another example in which a plurality of sources are used during authentication is disclosed in International Patent application WO 021417 74. In the system disclosed therein, an entity that wishes to authenticate a user can contact a verification engine, which has limited access to a plurality of databases containing personal information about the user. The verification engine presents the user with queries and the user's responses are presented to each corresponding database operator for validation. The database operators then return a confidence indication for the verification step and the verification engine combines the confidence indication from each database operator into a combined confidence indication used in authentication of the remote user.

With regard to authenticating other software entities, a further document, "An Evidential Model of Distributed Reputation Management" by Bin Yu and Munindar P. Singh, Int. Conf., Autonomous Multi-Agaent Systems, Bologna, Italy 2002, deals with the issue of trust within a community of software agents. This document discusses the advantages of collaborative behaviour between agents to evaluate the trustworthiness of each other, and proposes a Bayesian method for combining trust assessments from multiple agents. This paper is concerned with the issue of updating an agent's rating by obtaining testimonies from other agents, and in particular how to manage a chain of referrals until an appropriate agent is contacted who can give information on interactions it has had with the agent in question.

Accordingly, it is an object of the present invention to seek to provide an improved authentication system and method for authenticating an entity (which could be, for example, a human entity, a software agent or Web service).

A first aspect of the present invention provides a method for generating an authentication rating for an entity, comprising:

   receiving a message identifying an entity, which message requires authentication of said entity;
   receiving data from each of a plurality of sources, said data representing at least a rating for said authentication according to a criteria;

analysing said received data using a set of predefined fuzzy inferencing rules so as to calculate an authentication rating for said entity

wherein said plurality of sources include a local store for storing previous case data for a plurality of entities, and said analysis step involves combining previous case data for said entity with one or more current authentication ratings for said entity.

A second aspect of the present invention provides a system for generating an authentication rating for an entity, comprising:

receiving means for receiving a message identifying an entity, which message requires identification of said entity; the receiving means being further arranged to receive in use from each of a plurality of sources data representing a rating of said entity according to a criteria; and

processing means arranged in use to analyse said received data using a set of predefined fuzzy inferencing rules so as to calculate an authentication rating for said entity wherein said plurality of sources include a local store for storing previous case data for a plurality of entities, and said processing means being arranged to calculate an authentication rating for said entity by combining previous case data for said entity with one or more current authentication ratings for said entity. ,

For a better understanding of the present invention, specific embodiments will now be described, by way of example, with reference to the accompanying drawings, in which:

Figure 1 shows a computer network including an authentication server according to an embodiment of the invention;
Figure 2 shows a schematic of the authentication server according to an embodiment of the invention;
Figure 3 is a flow chart illustrating an authentication process performed by the authentication server of Figure 2;
Figure 4 illustrates fuzzy input sets for trust and confidence ratings;
Figure 5 illustrates examples of assigning trust and confidence ratings to a set of fuzzy rules;
Figure 6 shows a representation of all possible fuzzy output sets for a set of fuzzy rules; '
Figure 7 shows a schematic of a multi-agent distributed authentication system according to a second embodiment of the invention;
Figure 8 is a network diagram of the system of Figure 7; and
Figure 9 shows a functional block diagram of the inputs to the inferencing component of the embodiments of the invention.

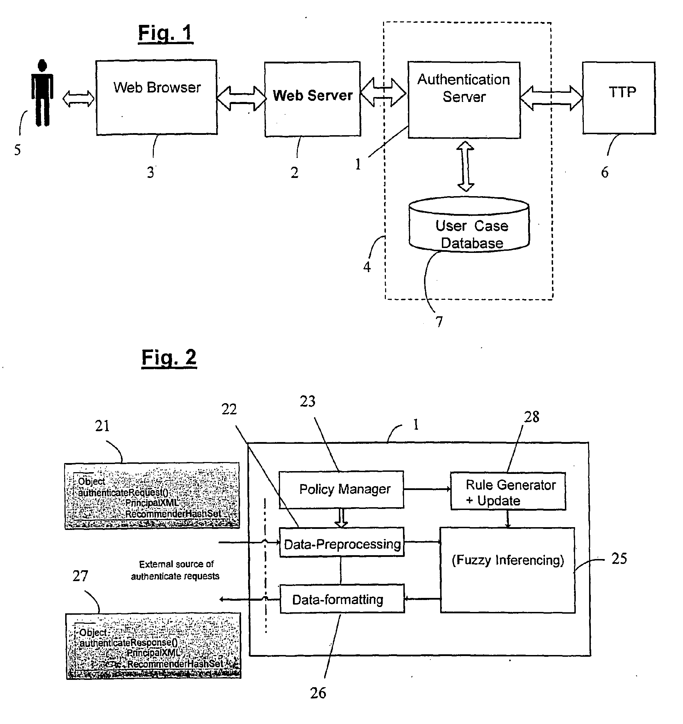

Figure 1 illustrates a computer network which includes an authentication server 1 according to an embodiment of the invention. In this example, the authentication server 1 forms part of an authentication web service 4, and is connected to a Web server 2 hosting, for example, a popular travel web site which is accessible to users via a Web browser interface 3. In a typical scenario, a user 5 wishing to purchase travel tickets via the Web site, logs on via browser interface 3. The user logs on using a single username and password, which is forwarded in an authentication request by the Web server 2 to the authentication web service 4. The authentication web service 4 then invokes its local authentication server 1 to determine whether or not to authenticate the user.

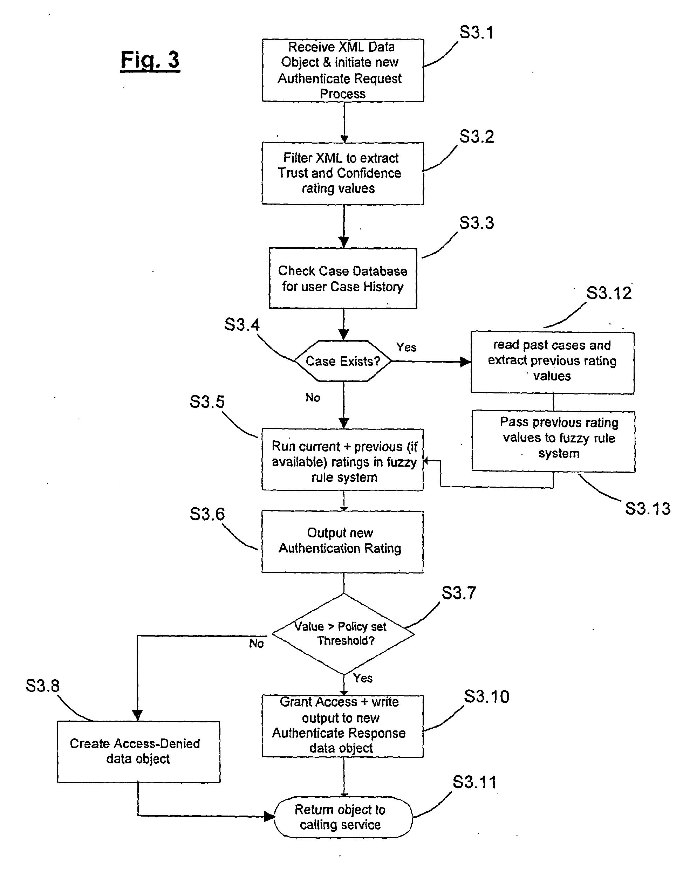

The forwarding web site 2 has included with its authentication request an evaluation of the level of trust it assigns to the login information provided by the user 5. In this case two numerical variables are used: a trust rating to indicate the level of trust, and a confidence rating for that trust level, and these have been assigned 0.9 and 0.2 respectively (out of a range of 0 to 1). The authentication web service 4 invokes its local authentication server 1 using a structured message format based on XML, and includes the trust and confidence ratings as *TrustValue* and *ConfidenceRating* respectively in the message. Subsequent processing by the authentication server 1 is described with reference to Figures 2 and 3.

Figure 2 schematically illustrates authentication server 1. The XML message object 21 is received from the Web Service 4 via a pre-processing module 22. Referring to Figure 3, the arrival of the XML message object (step S3.1) initiates a new Authenticate Request Process. The XML message is filtered (step S3.2) to extract *TrustValue* and *ConfidenceRating.* The authentication server 1 then communicates with a local database 7 (part of the authentication web service 4) which contains users' previous case data, so as to retrieve any relevant earlier case details for this user. In this case it is determined (step S3.4) that no previous case history exists for this user in the databse 7, and so the *TrustValue* and *ConfidenceRating* from the XML message object 21 are passed for processing (step S3.5) to the fuzzy inferencing module 25. At step S3.6, an authentication rating is output from the fuzzy inferencing module, and compared against a predefined security policy (step S3.7) to determine if it meets a policy-determined threshold limit.

In this instance, the authentication rating does not reach the policy threshold, so processing moves to step S3.8 to create a message object indicating that access should be denied, and this is returned to the calling service, ie the authentication web service 4. In this case, the web service policy determines on the basis of the response that a second set of reputation data is required for this user. The authentication service 4 sends an authenticate request to a Trusted Third Party (TTP) 6. The TTP responds, using the structured XML message format, with data it holds relating to the authentication of the user, including two further numeric data values corresponding to *TrustValue* and *ConfidenceRating,* and the web service creates a new authenticate request object which it passes to the authentication server 1 including *TrustValue* and *ConfidenceRating.* Processing again moves through the flow chart of Figure 3 as before, with this time step S3.4 determining that case data for this user (stored as a result of the previous pass through the processing) is now stored in the database. At step S3.12, this previous case data is retrieved and passed on (step S3.13) for processing by the fuzzy rule sytem. This time, the previous ratings are combined (step 3.5) new trust and confidence ratings and a revised authentication rating is output. The output authentication rating now satisfies the security policy threshold (step S3.7), and so processing moves to step S3.10 where the data-formatting module 26 creates an authenticate signal (again in the form of an XML message object 27) which is sent in step S3.11 back to the calling service (ie the authentication web service 4). The authentication web service 4 then communicates with the calling web server 2, indicating that it should grant access to the user.

With reference to Figure 2, the input/output channels to the fuzzy inferencing module 25 via the preprocessing module 22 and formatting module 26 can be seen. This arrangement allows a generic authenticate object to be passed from the calling service via the pre-processing class to the Inferencing component, and for a new authenticate response object to be generated and passed back to the calling service. These pre and post processing classes allow dynamic reconfiguration of the data format based on current policy requirements, and hence no run-time modifications to the Inferencing component will normally be required. The database access occurs external to the Inferencing process within a class for parsing structured data from the message objects.

The authentication server 1 further includes a policy manager 23 which stores policy requirements and a module 28 for generating updated version of fuzzy rules. The policy manager 23 is configurable by a system administrator, and determines on the basis of the authentication ratings whether the user's authentication request should be granted or rejected.

As already mentioned, after a case has been evaluated, the authentication result is stored in the local user case database 7 by the system, including the date and timestamp of the transaction. When the same user makes a request at any future date this information is retrieved from the database and combined with the current trust ratings to generate a new evaluation. Specifically, the length of time a user has been known to the system can form one input to a fuzzy rule which allocates an increased level of trust proportional to the length of time a user has been known to the system (presuming no violation by that user of any resource has been recorded by the system).

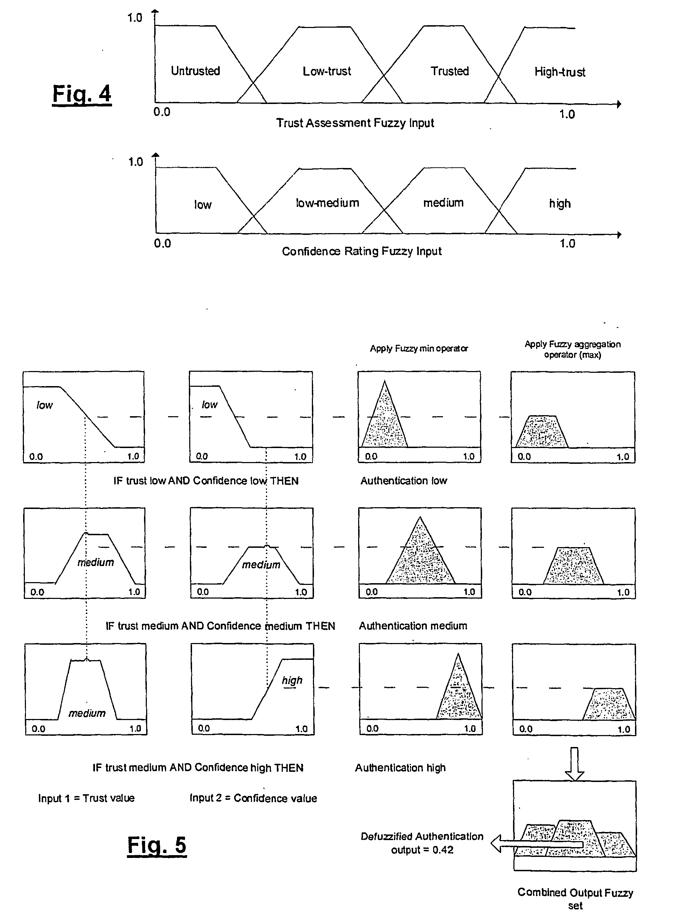

With reference to Figures 4, 5 and 6, the fuzzy based inferencing performed by the fuzzy inferencing module 25 will now be described in more detail. The theoretical basis behind the inferencing is that soft computing techniques can be successfully applied to generate an authentication rating for an entity (eg a human user, software agent or web service) based on a plurality of varied inputs. This is a two-stage process, in which firstly a numeric value is assigned to a trust rating for that entity, and a confidence rating is assigned to the estimation of trust. Secondly, the trust and confidence ratings are assigned to fuzzy input sets and processed according to a set of fuzzy rules. Figure 4 shows some exemplary fuzzy input sets. These trapezoidal shapes are simple and convenient forms for the input sets, although the system could of course be implemented using any suitable input set shape, such as those based on Gaussian or sigmoidal distributions.

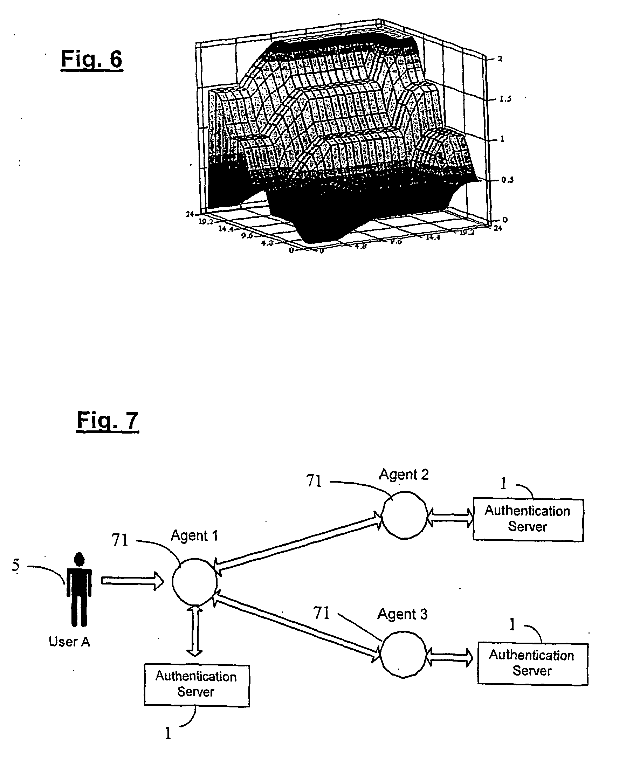

After fuzzified input variables have been assigned using the sets of figure 4, the resulting outputs are then combined using a matrix of fuzzy rules such as the type indicated in Figures 5 and 6. The system is able to combine any number of Fuzzy Associative Memory (FAM) rule sets for a single authentication process. Alternatively, each individual FAM set might correspond to different context of request (for example, different classes of user such as "accounts", "personnel", "security"). Hence, the system can apply a different set of policy-generated rules to evaluate a user's authentication rating in different contexts.

The key benefit in selecting a set of fuzzy rules to produce an authentication response from multiple input sources lies in the ability to apply a set of linguistic operators as IF THEN rules. These allow a smooth mapping of complex policy requirements into automated generation of an authentication decision.

The type of Inferencing used in the authentication process is based on numeric processing, i.e. we have a variable number of numeric input elements which need to be integrated to generate a final authenticate response. Future versions of the system could also use more advanced neuro-fuzzy techniques to consider other data sources.

In operation a binary Fuzzy Associative Memory system inference procedure activates the antecedent rules of each fuzzy matrix entry to generate the resultant fuzzy output. The illustrations in Figure 5 show example assignment of trust and confidence values to a set of fuzzy rules. In practice a *min* or *max* product rule is used to inference between fired fuzzy rules. To create the output set we can use product Inferencing again:

$$\forall x: \mu_{out}(x) = \max(\mu_{out\,1}(x), \mu_{out\,2}(x), ....) \qquad \text{Eqn.1}$$

The next stage is to convert the fuzzy output set back into a crisp value. The method chosen in the embodiment is height defuzzification, which is the simplest and fastest method available and ignores both the shape and support of the membership sets, and simply uses the weighted peak of each set. This gives, for the combined fuzzy output set in Figure 5 (bottom right image) a defuzzified authentication rating of 0.42. When this procedure is performed for all possible fuzzy output sets, the resulting outcome is as represented in Figure 6.

In the embodiment, the multiple incoming trust ratings are combined using one FAM set, and the incoming confidence ratings using another. The resulting single trust and confidence ratings are then analysed using a third FAM rule set to obtain the final authentication rating. In Figure 6, therefore, the x-axis represents the FAM input from trust rating assessment, the y-axis represents the FAM input from confidence rating assessment, and the z-axis represents the output authentication rating value.

For alternative embodiments, a wide range of alternative fuzzy operators could be applied with the same effect. This is a common property of Fuzzy Systems and enables the robust and rapid generation of a working rule base to be created.

An advantage of using fuzzy logic as the core inferencing mechanism is that multiple authentication data sets from varied sources can be combined. The system is designed to provide automated software (eg a Web Service as in the embodiment above, or software agents as in the second embodiment below) with the ability to assign an authentication rating to a entity, eg human user, service or external agent. This mechanism is ideally suited to the development of e-commerce and web service processes. Although in the embodiment above, only two sets of authentication data were utilised, this may be increased to any number of different sources.

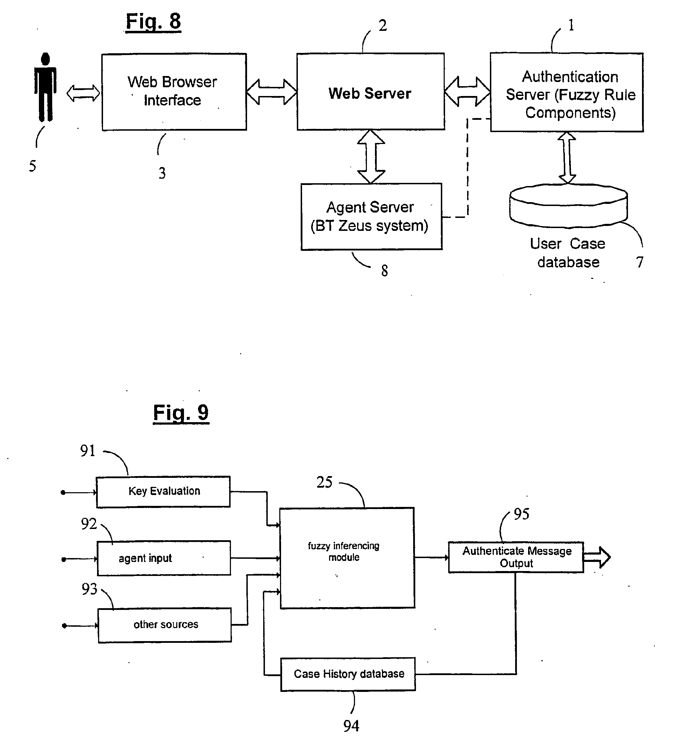

A second embodiment according to the invention will now be described with reference to Figures 7 and 8. Figure 7 is a schematic showing the use of distributed authentication servers 1 within a multi-agent collaborative scenario. In this arrangement, a plurality of agents 71 provide a mechanism for collaborative behaviour which enables interaction and distribution of information between multiple sources, so as to provide a robust authentication mechanism. Each agent 71 is in communication with a local authentication server, and the system, operates as follows. Agent 1 might initiate an authentication request based on input from the user 5. The agent broadcasts the request to agents 2 and 3 as an XML formatted message, for example see listing 1 below:

```
<?xml version="1.0" encoding="UTF-8" ?>
<Authenticate>
<Principal>agent</Principal>
<Category>accounts</Category>
<TrustValue>0.564</TrustValue>
<ConfidenceRating>0.99</ConfidenceRating>
<Policy>D:\trust\policy</Policy>
<Recommenders>
        <Agents>
            <ID>
            < Fred>
            <II D>
            <ID>
            < Phobos>
            </ID>
        </Agents>
</Recommenders>
</Authenticate>
```

**Listing 1. Example XML based Authenticate message object (formatted authentication message that is exchanged between authentication systems or agents).**

Upon receipt of this XML message, Agents 2 and 3 query their local authentication servers, and obtain an authentication response message for the specified user. They return the data to Agent 1 which then combines the returned data with its local assessment of the user's authentication status and passes the data to its local authentication server to generate a final authenticate response for this user. Table 1 below illustrates a set of example trust and confidence ratings output by each of the local authentication servers fuzzy inferencing mechanism:

**Table 1: Set of example parameter values (ratings) generated by the three distributed authentication servers in Figure 7, in response to the three agents processing a single user authenticate query.**

|  | Agent 1 | Agent 2 | Agent 3 |
|---|---|---|---|
| Trust Rating | 0.3 | 0.6 | 0.9 |
| Confidence Rating | 0.5 | 0.7 | 0.8 |
| Authentication Rating | 0.4 | 0.8 | 0.88 |
| Threshold Response | reject | accept | accept |

Figure 8 illustrates a modified version of the computer network of Figure 1, adapted to include an agent server 8 in communication with the web server 2 and authentication server 1. In the second embodiment, an example scenario might involve for example a corporate Intranet in which a user 5 needs to access an accounts server at a remote site. The user uses a web browser interface 3 to log into a client web application hosted by web server 2, and provides their credentials which are forwarded to the local agent network. An agent (such as Agent 1 in Figure 7) processes the request and broadcasts a new authenticate request into the agent network. After a predefined number N of agents have replied, the requesting agent passes the set of authenticate responses to a local authentication server to generate the final authenticate response and determine if the users access should be granted. From the parameters in table 1 above, this authentication might be performed in one of two ways. On the one hand, the local security policy settings may determine that if 2 out of 3 agents validated the user's authentication status, then authentication is automatically granted. Alternatively, the security policy may dicate that all the trust and confidence ratings supplied by the agents must be combined together by the fuzzy inferencing module in the manner similar to that discussed earlier.

As already discussed, a significant benefit of using fuzzy logic is the ability to combine various heterogeneous sources of data associated with the level of trust for a user. In Figure 9, a block diagram illustrates examples of the various types of inputs which may be used during processing by the inferencing component 25 of the embodiments. Agent inputs 92, such as the type indicated in Table 1 provided in the form of XML formatted messages, are one possible input source. A further input source is data provided by a local case history database 94. Further inputs might include, for example, key evaluations 92, in which another entity (e.g. software agent, authentication server, etc) indicates its acceptance of the authentication of a user by sending its public key. Finally, any other sources 93, such as numeric or linguistic assessments of the trust associated with a user, can be combined using an appropriate set of fuzzy rules. All these types of source can be input together to the fuzzy inferencing module 25 for generating an authentication assessment of a particular user (or any other type of entity), the results of which are then output using an appropriate authenticate message 95 (for example, the XML message object 27 described for Figure 2).

In the embodiments, the exchange of formatted messages allows the exchange between authentication servers of trust / authentication ratings of specific users. In this manner, developed knowledge of a specific user can be exchanged and integrated into the local user databases of multiple authentication systems. This enables a distributed database to be constructed which increases the robustness of the overall authentication service (ie when authentication of a particular user is requested, the necessary data can be retrieved from a number of alternative servers). However, a further aspect of the embodiments is that they also allow policy rules and fuzzy inferencing rules to be exchanged between servers. An example of when this might be used is if a new class of users was added to the system which needed a different authentication profile (e.g. contract staff may require a higher degree of authentication than permanent staff). In this case, a sysstem administrator would only need to add the new policy rules / fuzzy rule set to one of the authentication servers, and they would automatically be propagated across the distributed authentication system by the software agents. An example of an XML message containing an encoded fuzzy rule is given below in Listing 2:

```
<?xml version="1.0" encoding="UTF-8" ?>
<Authenticate>
<Principal>agent</Principal>
<Category>accounts</Category>
<TrustValue>0.564</TrustValue>
<ConfidenceRating>0.99<lConfidenceRating>
<Policy> D:\trust\policy</Policy>
<Knowledge Base>
      <fuzzyset>
            <iD>
            <New Rule from Agent 1>
            </ID>
```

```
        <fuzzyparameter> 0.3,0.5,0.1,0.6,0.3
        <fuzzysettype> trapezoid
        <fuzzysetname> low
    <Ifuzzyset>
</Knowledge Base>
</Authenticate>
```

**Listing 2 Example XML Authenticate object containing an encoded fuzzy rule. This message and rule can be transferred between authentication servers, parsed and the rule inserted into the receiving rule base.**

Whilst in the embodiments, the structured message format used to communicate with the authentication server (s) is based on XML, the messages could be appropriately modified to integrate with any particular XML security standard, such as XKMS or SAML (Secure Authentication Markup Language) [http://www.oasis-open.org] for industrial compatibility. Alternatively, any other suitable distributed authentication protocol could be used.

It will be understood by those skilled in the art that the apparatus that embodies the invention could be a general purpose device having software arranged to provide an embodiment of the invention. The device could be a single device or a group of devices and the software could be a single program or a set of programs. Furthermore, any or all of the software used to implement the invention can be contained on various transmission and/or storage mediums such as a floppy disc, CD-ROM, or magnetic tape so that the program can be loaded onto one or more general purpose devices or could be downloaded over a network using a suitable transmission medium.

**Claims**

1. A method for generating an authentication rating for an entity (5), comprising:

   receiving a message identifying an entity (5), which message requires authentication of said entity (5);
   receiving data from each of a plurality of sources (5,7,97-94), said data representing at least a rating for said authentication according to a criteria;
   analysing said received data using a set of predefined fuzzy inferencing rules so as to calculate an authentication rating for said entity (5);
   said method being **characterised by** said plurality of sources (6,7,91-94) including a local store (7) for storing previous case data for a plurality of entities, and said analysis step involving combining previous case data for said entity (5) with one or more current authentication ratings for said entity (5).

2. A method according to claim 1, wherein said data from each source (6,7,91-94) comprise data representing a trust rating for said entity (5) and data representing an associated confidence rating.

3. A method according to claim 2, wherein the analysis comprises:

   combining said plurality of data representing a trust rating using a first predefined set of fuzzy inferencing rules so as to calculate a combined trust rating;
   combining said plurality of confidence rating data using a second predefined set of fuzzy inferencing rules to calculate a combined confidence rating;
   and then analysing said combined trust rating and said combined confidence rating using a third predefined set of fuzzy inferencing rules so as to calculate said authentication rating.

4. A system (1) for generating an authentication rating for an entity (5), comprising:

   receiving means for receiving a message identifying an entity (5), which message requires identification of said entity (5);
   the receiving means being further arranged to receive in use from each of a plurality of sources (6,7,91-94) data representing a rating of said entity (5) according to a criteria;
   processing means arranged in use to analyse said received data using a set of predefined fuzzy inferencing rules so as to calculate an authentication rating for said entity (5); said system (1) being **characterised by**:

      said plurality of sources (6,7,91-94) including a local store (7) for storing previous case data for a plurality of entities, and said processing means being arranged to calculate an authentication rating for said entity (5) by combining previous case data for said entity (5) with one or more current authentication ratings for said entity (5).

5. A system (1) according to claim 4, said processing means being further arranged to compare said authentication rating with a predefined policy so as to determine whether to issue an authenticate signal.

6. A computer program or suite of programs executable by a computer system to cause the system (1.) to perform the method of any of claims 1 to 3.

7. A modulated carrier signal incorporating data corresponding to the computer program or at least one of the suite of programs of claim 6.

8. A computer readable storage medium storing a computer program or at least one of a suite of computer programs as claimed in claim 6.

**Patentansprüche**

1. Verfahren zum Erzeugen einer Authentisierungsbewertung für eine Entität (5), das aufweist:

Empfangen einer Nachricht, die eine Entität (5) identifiziert, wobei die Nachricht eine Authentisierung der Entität (5) erfordert; Empfangen von Daten von jeder einer Vielzahl von Quellen (6, 7, 91 - 94), wobei die Daten zumindest eine Bewertung bzw. ein Rating für die Authentisierung gemäß einem Kriterium darstellen; Analysieren der empfangenen Daten unter Verwendung eines Satzes von vordefinierten Fuzzy-Interferenz-Regeln, um so eine Authentisierungsbewertung für die Entität (5) zu berechnen;

wobei das Verfahren **dadurch gekennzeichnet ist, dass** die Vielzahl von Quellen (6, 7, 91 - 94) einen lokalen Speicher (7) umfassen zum Speichern vorheriger Fall-Daten für eine Vielzahl von Entitäten, und der Analyseschritt ein Kombinieren vorheriger Fall-Daten für die Entität (5) mit einer oder mehreren aktuellen Authentisierungsbewertung(en) für die Entität (5) umfasst.

2. Verfahren gemäß Anspruch 1, wobei die Daten von jeder Quelle (6, 7, 91 - 94) Daten, die eine Vertrauensbewertung für die Entität (5) darstellen, und Daten aufweisen, die eine zugehörige Konfidenzbewertung darstellen.

3. Verfahren gemäß Anspruch 2, wobei die Analyse aufweist:

Kombinieren der Vielzahl von Daten, die eine Vertrauensbewertung darstellen, unter Verwendung eines ersten vordefinierten Satzes von Fuzzy-Interferenz-Regeln, um so eine kombinierte Vertrauensbewertung zu berechnen;
Kombinieren der Vielzahl von Konfidenzbewertungsdaten unter Verwendung eines zweiten vordefinierten Satzes von Fuzzy-Interferenz-Regeln, um so eine kombinierte Konfidenzbewertung zu berechnen;
und dann Analysieren der kombinierten Vertrauerxsbewertung und der kombinierten Konfidenzbewertung unter Verwendung eines dritten vordefinierten Satzes von Fuzzy-Interferenz-Regeln, um so die Authentisierungsbewertung zu berechnen.

4. System (1) zum Erzeugen einer Authentisierungsbewertung für eine Entität (5), das aufweist:

Empfangsmittel zum Empfangen einer Nachricht, die eine Entität (5) identifiziert, wobei die Nachricht eine Authentaisierung der Entität (5) erfordert; wobei das Empfangsmittel weiter ausgebildet ist, in Betrieb Daten von jeder einer Vielzahl von Quellen (6, 7, 91 - 94) zu empfangen, wobei die Daten eine Bewertung der Entität (5) gemäß einem Kriterium darstellen;
Verarbeitungsmittel, das ausgebildet ist, in Betrieb die empfangenen Daten unter Verwendung eines Satzes von vordefinierten Fixzzy-Interferenz-Regeln zu analysieren, um so eine Authentisierungsbewertung für die Entität (5) zu berechnen; wobei das System (1) **gekennzeichnet ist dadurch**:

dass die Vielzahl von Quellen (6, 7, 91 - 94) einen lokalen Speicher (7) umfassen zum Speichern vorheriger Fall-Daten für eine Vielzahl von Entitäten, und das Verarbeitungsmittel ausgebildet ist, eine Authentisierungsbewertung für die Entität (5) zu berechnen **durch** Kombinieren vorheriger Fall-Daten für die Entität (5) mit einer oder mehreren aktuellen Authentisierungsbewertung(en) für die Entität (5).

**5.** System (1) gemäß Anspruch 4, wobei das Verarbeitungsmittel weiter ausgebildet ist, die Authentisierungsbewertung mit einer vordefinierten Richtlinie zu vergleichen, um zu bestimmen, ob es ein Authentisierungssignal ausgeben soll.

**6.** Computerprogramm oder Suite von Programmen, ausführbar durch ein Computersystem, um das System (1) zu veranlassen, das Verfahren gemäß einem der Ansprüche 1 bis 3 durchzuführen.

**7.** Moduliertes Trägersignal, das Daten enthält, die dem Computerprogramm oder zumindest einem der Suite von Programmen von Anspruch 6 entsprechen.

**8.** Computerlesbares Speichermedium, das ein Computerprogramm oder zumindest eines einer Suite von Programmen gemäß Anspruch 6 speichert.

**Revendications**

**1.** Procédé pour engendrer une cote d'authentification pour une entité (5), comprenant :

la réception d'un message identifiant une entité (5), ce message requérant une authentification de la dite entité (5),
la réception de données de chacune d'une pluralité de sources (6, 7, 91-94), les dites données représentant au moins une cote pour la dite authentification selon un critère,
l'analyse des dites données reçues en utilisant un ensemble de règles prédéfinies d'inférence floue afin de circulaire une cote d'authentitication pour la dite entité (5),
le dit procédé étant **caractérisé par le fait que** la dite pluralité de sources (6, 7, 91-94) comprend une mme locale (7) pour mémoriser des données de cas précédents pour une pluralité d'entités, et la dite étape d'analyse comprend le fait de combiner des données de cas précédents pour la dite entité (5) avec une ou plusieurs cotes d'authentification courantes pour la dite entité (5).

**2.** Procédé selon la revendication 1, dans lequel les dites données issues de chaque source (6, 7, 91-94) comprennent des données représentant une cote de confiance pour la dite entité (5) et des données représentant une cote de confiance associée.

**3.** Procédé selon la revendication 2, dans lequel l'analyse comprend les étapes consistant à :

combiner la dite pluralité de données représentant une cote de confiance en utilisant un premier ensemble prédéfini de règles d'inférence floue afin de circulaire une cote de confiance combinée,
combiner la dite pluralité de données d'cote de confiance en utilisant un deuxième ensemble prédéfini de règles d'inférence floue pour calculer une cote de confiance combinée,
puis analyser la dite cote de confiance combinée et la dite cote de combinée en utilisant un troisième ensemble de règles d'inférence floue afin de circulaire la dite cote d'authentification.

**4.** Système (1) pour engendrer une cote d'authentification pour une entité (5), comprenant :

des moyens de réception pour recevoir un message identifiant une entité (5), le dit message requérant d'identifier la dite entité (5),
les moyens de réception étant en outre agencés pour, en fonctionnement, recevoir de chacune d'une pluralité de sources (6, 7, 91-94), des données représentant une cote de la dite entité (5) selon un critère,
des moyens de traitement agencés pour, en fonctionnement, analyser les dites données reçues en utilisant un ensemble de règles prédéfinies d'inférence floue afin de circulaire une cote d'authentification pour la dite entité (5), le dit système (1) étant **caractérisé par le fait que** :

la dite pluralité de sources (6, 7, 91-94) comprend une mémoire locale (7) pour mémoriser des données de cas précédents pour une pluralité d'entités, et les dits moyens de traitement sont agencés pour calculer une cote d'authentification pour la dite entité (5) en combinant des données de cas précédents pour la dite entité (5) avec une ou plusieurs cotes d'authentification courantes pour la dite entité (5).

**5.** Système (1) selon la revendication 4, les dits moyens de traitement étant en outre agencés pour comparer la dite cote d'authentification à une politique prédéfinie afin de déterminer s'il convient d'émettre un signal d'authentification.

**6.** Programme d'ordinateur ou suite de programmes exécutables par un système à ordinateur pour faire que le système (1) exécute le procédé de l'une quelconque des revendications 1 à 3.

**7.** Signal de porteuse module contenant des données correspondant au programme d'ordinateur ou au moins l'un de la suite de programmes de la revendication 6.

**8.** Médium de stockage lisible par un calculateur, stockant un programme d'ordinateur ou au moins l'un d'une suite de programmes tels que revendiqués dans la revendication 6.

## Fig. 1

Web Browser — Web Server — Authentication Server — TTP

5

3

2

1

User Case Database

4

7

6

## Fig. 2

21

Object
authenticateRequest()
PrincipalXML
RecommenderHashSet

22

23

1

28

Policy Manager

Rule Generator
+ Update

Data-Preprocessing

(Fuzzy Inferencing)

25

External source of
authenticate requests

27

Object
authenticateResponse()
PrincipalXML
RecommenderHashSet

Data-formatting

26

## Fig. 3

**S3.1**
Receive XML Data Object & initiate new Authenticate Request Process

**S3.2**
Filter XML to extract Trust and Confidence rating values

**S3.3**
Check Case Database for user Case History

**S3.4**
Case Exists?

Yes →

**S3.12**
read past cases and extract previous rating values

Pass previous rating values to fuzzy rule system
**S3.13**

No ↓

**S3.5**
Run current + previous (if available) ratings in fuzzy rule system

**S3.6**
Output new Authentication Rating

**S3.7**
Value > Policy set Threshold?

No →

Yes ↓

**S3.8**
Create Access-Denied data object

**S3.10**
Grant Access + write output to new Authenticate Response data object

**S3.11**
Return object to calling service

12

**Fig. 4**

Trust Assessment Fuzzy Input

Confidence Rating Fuzzy Input

Apply Fuzzy min operator

Apply Fuzzy aggregation operator (max)

IF trust low AND Confidence low THEN — Authentication low

IF trust medium AND Confidence medium THEN — Authentication medium

IF trust medium AND Confidence high THEN — Authentication high

Input 1 = Trust value     Input 2 = Confidence value

**Fig. 5**

Defuzzified Authentication output = 0.42

Combined Output Fuzzy set

## Fig. 6

## Fig. 7

## Fig. 8

5

Web Browser Interface  3

Web Server  2

Authentication Server (Fuzzy Rule Components)  1

Agent Server (BT Zeus system)  8

User Case database  7

## Fig. 9

91 Key Evaluation

92 agent input

93 other sources

25 fuzzy inferencing module

95 Authenticate Message Output

Case History database  94

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02141774 A

**Non-patent literature cited in the description**

- Multimodal Decision-Level Fusion for Person Authentication by Vassilios Chatzis, Adrian G. Bors and Ioannis Pitas,. *IEEE Trans. on Systems, man and cybernetics Part A: Systems and Humans,* November 1999, 674-681

- **BIN YU ; MUNINDAR P.** An Evidential Model of Distributed Reputation Management. *Singh, Int. Conf., Autonomous Multi-Agaent Systems,* 2002